# EUROPEAN PATENT SPECIFICATION

(11) **EP 1 201 596 B1**
(45) Date of publication and mention of the grant of the patent: **07.12.2005**
(21) Application number: 01308760.6
(22) Date of filing: 15.10.2001
(51) Int. Cl.: B66F 9/10, B66F 9/075, B62D 53/02

(54) **Lift truck**
Gabelhubwagen
Chariot élévateur à fourche

(30) Priority: 27.10.2000 GB 0026260
(43) Date of publication of application: 02.05.2002
(73) Proprietor: Translift Engineering Limited, Redditch, Worcestershire B98 0RB (GB)
(72) Inventor: Brown, Frederick, Stratford Upon Avon, CV37 8LB (GB)
(74) Representative: Watts, Peter Graham

(56) References cited:
- DE-B- 1 209 450
- DE-U- 29 710 645
- GB-A- 1 427 194
- GB-A- 2 234 214
- GB-A- 2 321 049
- US-A- 2 284 237
- US-A- 2 986 295

## Description

The present invention relates to lift trucks, in particular fork lift trucks.

Lift trucks are known and fall into two broad categories, building trucks and warehouse type trucks.

Building trucks are used outside to transport material around building sites. Typically building trucks will have a mast with vertically moveable forks upon which the material can be lifted and carried.

Building sites have contrasting types of terrain, such as soft ground, rough ground and surfaces having loose material, in addition to the possibility of the terrain being wet and sloping. Therefore building trucks have particular features which enable them to negotiate such terrain.

To operate over rough terrain, the building truck must have a suitably high ground clearance in addition to the suspension properties of pneumatic tyres. The tyre footprint loading of the building truck must be sufficiently low to prevent it from sinking into soft ground. Consequently, high flotation tyres are employed, and the weight of the building truck is minimised, the weight being determined by the structural strength requirements of the truck.

To maintain traction over the various terrain, particularly when conditions are wet, and the surface is inclined, building trucks employ drive to all four wheels. This is particularly necessary when taking into consideration the low weight of the building truck. Furthermore the centre of gravity is located at the approximately the central position of the building truck to load all four wheels evenly, thus ensuring each wheel is capable of providing tractive force.

Building trucks must also be sufficiently manoeuvrable, and generally have the ability to turn the forks and steering up to a maximum of about 45 degrees either side of the forward direction (i.e. in a yaw direction). See, for example, GB-A-2 321 049, corresponding to the preamble of independent claim 1. However, angles significantly above 45 degrees are not used since they tend to make the building truck unstable.

Building trucks are powered by petrol or diesel driven internal combustion engines where the harmful emissions are diluted in the atmosphere.

Building trucks are not required to lift loads to very great heights because:-
a) other forms of lifting devices are available e.g. cranes.
b) lifting a load to a significant height, when the building truck is on uneven ground is dangerous since the truck may tip over as the load is raised. This is particularly significant on building trucks, which have pneumatic tyres (and hence allow roll or pitch of the truck body as the load is raised) and, as mentioned previously, building trucks are designed to be light (in line with strength requirements) and have a relatively high ground clearance (thus raising the centre of gravity of the truck).

Conversely warehouse type trucks are required to lift loads to significant heights and thus use a telescopic mast and fork arrangement to load and unload goods in loading bays, typically in the aisles of warehouses. To maximise space efficiency in the warehouse, the aisles are narrow, and goods are stacked vertically in the loading bay.

The conditions and the requirements of a lift truck in a warehouse, and the associated problems these conditions bring, contrast strongly with those conditions found on a building site and the requirements of a building truck.

Warehouses are inside and hence dry, the warehouse floor is generally hard and smooth, usually of concrete, as well as being flat. Therefore there are no associated traction problems associated with the warehouse type truck when moving along an aisle, and for this reason warehouse type trucks employ drive to the two rear wheels.

Operating inside a warehouse requires warehouse type trucks to be powered by power sources where there are no harmful emissions, such as gas fuelled internal combustion engines or electric motors. Therefore it would be inappropriate to use a lift truck powered by a petrol or diesel fuelled internal combustion engine in a warehouse.

To maintain the stability of the warehouse type truck, particularly when it is loading and unloading goods into the loading bays, extra weight is added to the rear of the warehouse type truck. The combined extra weight and the weight of the heavy goods exhibits high loading on the tyres of the warehouse type truck, and hence solid tyres are used, i.e. non-pneumatic tyres, which do not significantly deform during loading and unloading. Such tyres exert high loadings on the ground which must be sufficiently strong to resist such loads, hence the use of concrete.

The added extra weight results in the centre of gravity being located towards the rear of the truck. Thus, the stability of the truck is improved when steering at high steer angles.

The narrow nature of the warehouse aisles, requires the warehouse type truck to operate in a severely restricted space, hence the warehouse type truck must be able to load and unload goods into loading bays which are at 90 degrees to the aisle. This requires the front wheels and forks to be positioned at an angle of 90 degrees relative to the rear wheels (i.e. in a yaw direction).

A problem arises when power is applied to the rear wheels when the front wheels are angled at 90 degrees to the rear wheels, in that the front wheels tend to slip sideways relative to their normal direction of rotation, as opposed to steering the warehouse type truck into the loading bay as required. The truck tends to shuffle along the aisle resulting in the load becoming misaligned with its loading bay and the operator has to reverse and try again. This problem is more acute as the horizontal distance between the point about which the front wheels steer and the horizontal axis of the front wheels reduces. Thus it is difficult to manoeuvre the goods into the loading bay.

An object of the present invention is to provide a improved form of lift truck where this problem is reduced.

Thus, according to the present invention there is provided a warehouse lift truck comprising a body, a lifting device pivotally attached to the body, a pair of rear wheels mounted to the body and a pair of front wheels rotatably mounted on opposing ends of an axle to the lifting device, such that the axes of rotation of the front wheels are fixed relative to each other, the axle being capable of rolling relative to the lifting device about a horizontal axis and being pivotable, with the lifting device, through substantially 90 degrees to either side of a straight ahead position relative to the body to steer the truck, characterised in that each of the front and rear wheels is driven by a separate motor and means is provided to regulate power to each of the motors.

The invention will now be described, by way of example only, with reference to the accompanying drawings in which:-
Figure 1 is a side elevational view of a lift truck according to the present invention;
Figure 2 is a plan view of the lift truck of Figure 1;
Figure 3 is an exploded partial front view of the lift truck of Figure 1 showing various axes;
Figure 4 is a schematic view of the drive arrangement of the lift truck of Figure 1, and
Figure 5 is a plan view of the lift truck of Figure 1 when loading goods into a loading bay,

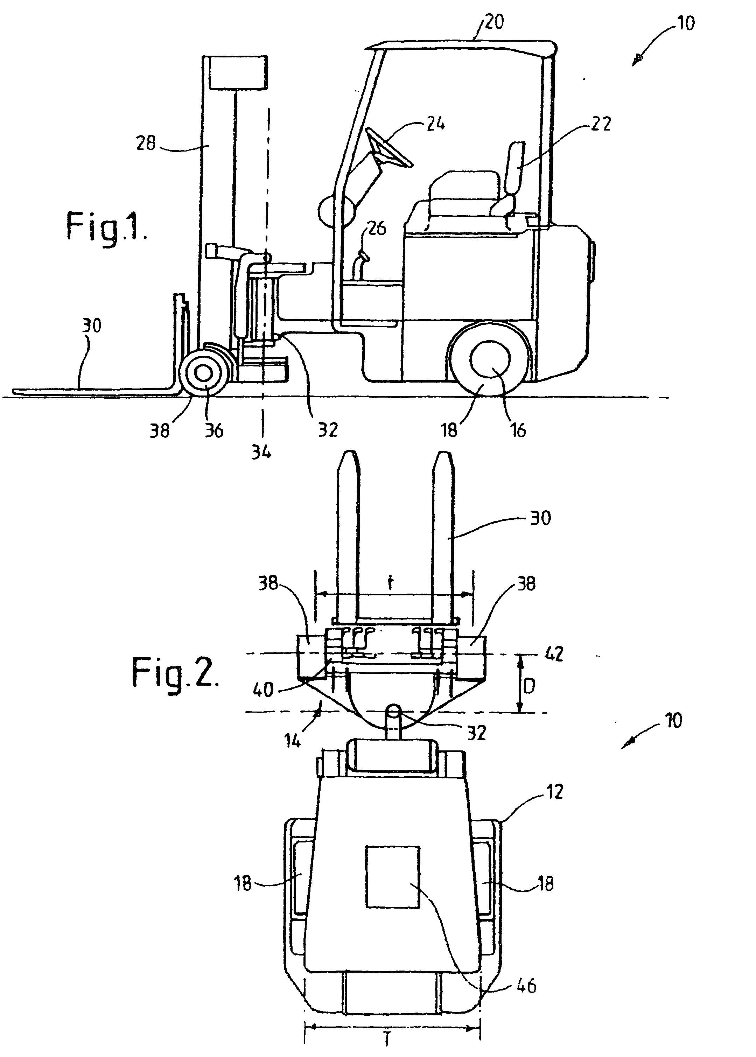

With reference to Figure 1 and Figure 2, there is shown a lift truck 10 comprising a body 12 and a lifting device 14.

The body 12 comprises a pair of rear wheels 16, the rear wheels 16 having solid tyres 18, a cabin 20 housing a seat 22, steering controls 24, pedals 26 and lifting controls (not shown).

The lifting device 14 comprises a mast 28, forks 30, and a mechanism (not shown) for raising and lowering the forks 30 on the mast 28. The mechanism consists of a conventional telescopic construction and can be driven hydraulically. The lifting device 14 is pivotally attached to the body at a pivot hinge 32 having a pivot axis 34.

The lift truck 10 further comprises front wheels 36, which are mounted below the lifting device 14. The front wheels have solid tyres 38, and are rotatably mounted on opposite ends of an axle 40. The front wheels 36 rotate about a common horizontal axis 42 to provide forward and reverse motion to the lift truck 10. Axis 42 is positioned at horizontal distance D forward of pivot axis 34.

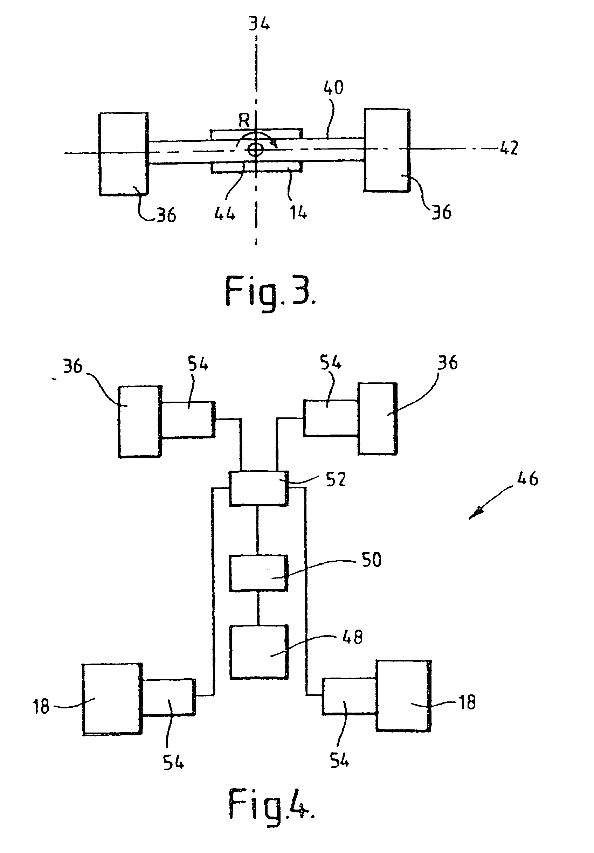

Figure 3 shows that the axle 40 is pivotally fixed to the lifting device via a pin and hole arrangement 44 at the mid-point of the axle 40. Thus the axle 40 can roll relative to the lifting device 14, with the forward direction of the lift truck being taken as the reference axis for the rolling direction (R). This rolling of the axle compensates for small undulations in the flatness of the ground. Note the word roll is being used in the technical sense of roll, pitch and yaw as the three directions of rotation of a vehicle. Thus, roll relates to rotation about a horizontal axis aligned in the direction of travel of the vehicle, pitch relates to rotation about a horizontal axis aligned laterally relative to the vehicle, and yaw relates to rotation about a vertical axis.

The axle 40 is typically limited in its ability to roll. Typically one wheel 36 could move up relative to the pin and hole arrangement 44 by 25mm (with the other wheel moving down a corresponding amount). Clearly the same wheel 36 can also move down typically 25mm. However, in other embodiments a particular wheel might be able to move up 50mm and down 50mm relative to the axle pivot. Typically the movement of one wheel by plus or minus 25mm and plus or minus 50mm corresponds approximately to an angle of plus or minus 3 degrees and plus or minus 6 degrees respectively.

The pin and hole arrangement is arranged such that when the lifting device 14 pivots about the pivot axis 34, the axle 40, and hence the front wheels 36, also pivot about the pivot axis 34 to steer the truck.

Consideration of Figure 2 shows that the track T (which is defined as the transverse distance between the centre lines of two wheels on same axis) of the rear wheels, is greater than the track t of the front wheels. Furthermore, the horizontal distance D is less than half the track T of the rear wheels.

The lifting device 14 and hence the front wheels 36 are driven about the pivot axis 34 by a hydraulic steer arrangement (not shown).

Figure 4 shows a drive arrangement 46 which is provided for driving the front wheels 36 and the rear wheels 16. Means is provided for driving any wheel in a forward or reverse direction.

The power source for the drive system in this embodiment is an internal combustion engine 48 powered by a gas fuel. The internal combustion engine 48 provides power to a hydraulic pump 50. The hydraulic pump 50 feeds a control unit 52, which in this embodiment is a valve arrangement (not shown), the control unit 52 providing a variable output to four hydraulic motors 54, each hydraulic motor 54 driving an associated front wheel 36 or rear wheel 16. The control unit 52 is arranged such that it can regulate power to each of the four wheels.

In other embodiments, the power source could be a battery which in turn drives four electric motors.

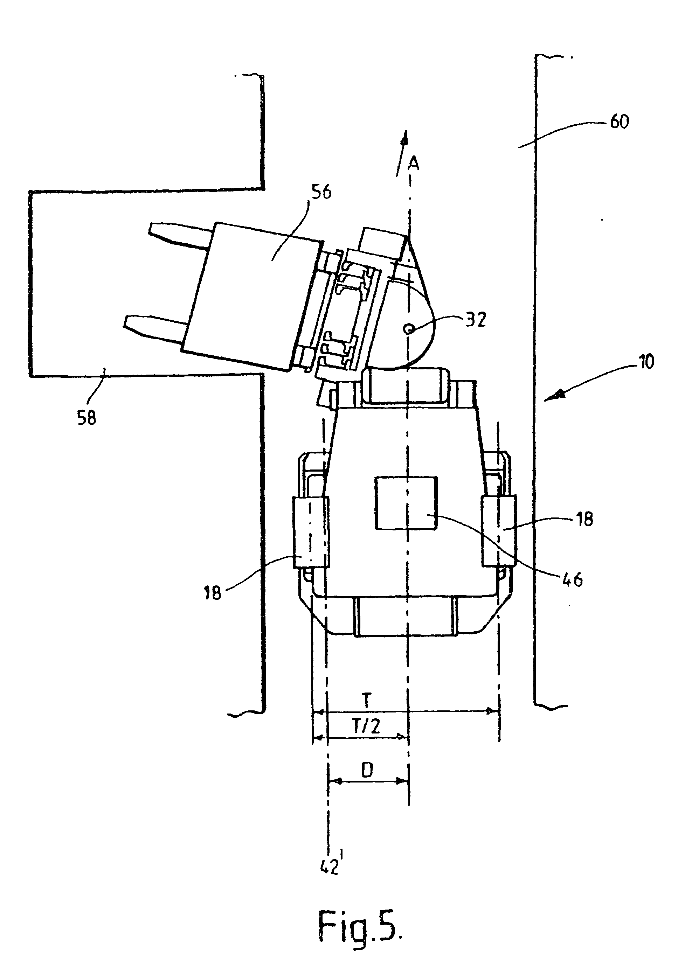

Figure 5 shows the operation of the lift truck 10 when loading goods 56 into a loading bay 58, the lift truck 10 being positioned in a narrow aisle 60.

Consideration of Figure 5 shows the position 42' of the axis 42 relative to the body 12, when the front wheels are positioned at 90 degrees to the body 12. It can be seen that the horizontal distance D is less than ½ T, the track of the rear wheels.

To manoeuvre the goods 56 into the loading bay 58, the lifting device 14 is rotated about the pivot axis 34. It is necessary to manoeuvre the lift truck 10 such that front wheels 36 are substantially at 90 degrees to the lift truck body 12 in order to position the goods 56 in the loading bay 58 since the aisle 60 is relatively narrow when compared with the width of the body 12.

When loading the goods 56 it is necessary to drive the front wheels 36 into the loading bay 58. By regulating and controlling the power to the front and rear wheels via the control valve arrangement, a balance can be obtained that provides enough power to the front wheels 36 to enable the front wheels 36 to drive into the loading bay 58.

The ability to control the power to the front wheels 36 prevents the front wheels from being forced sideways in the direction of arrow A along the aisle, i.e. in the direction of the rear wheels when the front wheels are positioned substantially at 90 degrees relative to the rear wheels.

The ability to drive the rear wheels in opposite directions, whilst simultaneously driving the front wheels also considerably increases the manoeuvrability of the lift truck, enabling goods to be loaded and unloaded in confined spaces such as in the narrow aisle of a warehouse.

## Claims

1. A warehouse lift truck (10) comprises a body (12), a lifting device (14) pivotally attached to the body (12), a pair of rear wheels (16) mounted to the body (12) and a pair of front wheels (36) rotatably mounted on opposing ends of an axle (42) to the lifting device (14), such that the axes of rotation of the front wheels (36) are fixed relative to each other, the axle (42) being capable of rolling relative to the lifting device (14) about a horizontal axis and being pivotable, with the lifting device (14), through substantially 90 degrees to either side of a straight ahead position relative to the body (12) to steer the truck (10), **characterised in that** each of the front and rear wheels (16,36) is driven by a separate motor (54) and means (52) is provided to regulate power to each of the motors (54).

2. A lift truck (10) according to claim 1 **characterised in that** each motor (54) may be drive in a forward or reverse direction.

3. A lift truck (10) according to claim 2 **characterised in that** one rear wheel (16) may be driven in the opposite direction to the other rear wheel (16).

4. A lift truck (10) according to Claim 1 to 3 **characterised in that** the motors (54) are hydraulic motors, a power source (48) driving a hydraulic pump (50) to provide hydraulic fluid under pressure to the hydraulic motors (54).

5. A lift truck (10) according to Claim 4 **characterised in that** the hydraulic pump (50) is a variable displacement pump.

6. A lift truck (10) according to Claim 5 **characterised in that** the variable displacement pump is a swash-plate type pump.

7. A lift truck (10) according to any one of claims 4 to 6 **characterised in that** the power source (48) is an internal combustion engine.

8. A lift truck (10) according to Claim 7 **characterised in that** the fuel for the internal combustion engine is a gas fuel.

9. A lift truck (10) according to any one of claims 1 to 3 **characterised in that** the motors (54) are electric motors, electricity to drive the motors being provided from a power source.

10. A lift truck (10) according to any one of Claims 4 to 6 and 9 **characterised in that** the power source (48) is battery.

11. A lift truck (10) according to any preceding claim **characterised in that** the track of the two front wheels (36) is less than the track (T) of the two rear wheels (16).

12. A lift truck (10) according to any preceding claim **characterised in that** the horizontal distance (D) between the point about which the front wheels (36) steer and the horizontal axis of the front wheels (36) is equal to or less than half the track (T) of the two rear wheels (16).

## Patentansprüche

1. Lager-Hubwagen (10) mit einem Grundkörper (12), einer Hubvorrichtung (14), die schwenkbar an dem Grundkörper (12) angebracht ist, einem Paar Hinterräder (16), die an dem Grundkörper (12) montiert sind, und einem Paar Vorderräder (36), die an entgegengesetzten Enden einer Achse (42) an der Hubvorrichtung (14) drehbar montiert sind, derart, daß die Drehachsen der Vorderräder (36) fest bezüglich einander sind, wobei die Achse (42) relativ zu der Hubvorrichtung (14) um eine horizontale Achse rollen kann und zusammen mit der Hubvorrichtung (14) über einen Winkel von etwa 90° nach jeder Seite einer Geradeauslage relativ zu dem Grundkörper (12) schwenkbar ist, um den Wagen (10) zu steuern, **dadurch gekennzeichnet, daß** jedes der Vorder- und Hinterräder (16, 36) von einem separaten Motor (54) angetrieben wird und eine Einrichtung (52) zum Regeln der Energiezufuhr zu jedem der Motoren (54) vorgesehen ist.

2. Hubwagen (10) nach Anspruch 1, **dadurch gekennzeichnet, daß** jeder Motor (54) in einer Vorwärts- oder Rückwärtsrichtung angetrieben werden kann.

3. Hubwagen (10) nach Anspruch 2, **dadurch gekennzeichnet, daß** ein Hinterrad (16) in der entgegengesetzten Richtung zu dem anderen Hinterrad (16) angetrieben werden kann.

4. Hubwagen (10) nach Anspruch 1 bis 3, **dadurch gekennzeichnet, daß** die Motoren (54) Hydraulikmotoren sind, wobei eine Energiequelle (48) eine Hydraulikpumpe (50) antreibt, um hydraulische Druckflüssigkeit den Hydraulikmotoren (54) zuzuführen.

5. Hubwagen (10) nach Anspruch 4, **dadurch gekennzeichnet, daß** die Hydraulikpumpe (50) eine verstellbare Verdrängerpumpe ist.

6. Hubwagen (10) nach Anspruch 5, **dadurch gekennzeichnet, daß** die verstellbare Verdrängerpumpe eine Schrägscheibenpumpe ist.

7. Hubwagen (10) nach irgendeinem der Ansprüche 4 bis 6, **dadurch gekennzeichnet, daß** die Energiequelle (48) ein Verbrennungsmotor ist.

8. Hubwagen (10) nach Anspruch 7, **dadurch gekennzeichnet, daß** der Treibstoff für den Verbrennungsmotor ein gasförmiger Treibstoff ist.

9. Hubwagen (10) nach irgendeinem der Ansprüche 1 bis 3, **dadurch gekennzeichnet, daß** die Motoren (54) Elektromotoren sind, wobei der Strom zum Antreiben der Motoren von einer Energiequelle geliefert wird.

10. Hubwagen (10) nach irgendeinem der Ansprüche 4 bis 6 und 9, **dadurch gekennzeichnet, daß** die Energiequelle (48) eine Batterie ist.

11. Hubwagen (10) nach irgendeinem vorhergehenden Anspruch, **dadurch gekennzeichnet, daß** die Spur der beiden Vorderräder (36) kleiner als die Spur (T) der beiden Hinterräder (16) ist.

12. Hubwagen (10) nach irgendeinem vorhergehenden Anspruch, **dadurch gekennzeichnet, daß** der horizontale Abstand (D) zwischen dem Punkt, um den die Vorderräder (36) steuern, und der horizontalen Achse der Vorderräder (36) gleich der Hälfte der Spur (T) der beiden Hinterräder (16) oder kleiner ist.

## Revendications

1. Chariot élévateur pour entrepôt (10) comprenant un corps (12), un dispositif de levage (14) fixé au corps de façon à pouvoir pivoter (12), une paire de roues arrière (16) montées sur le corps (12) et une paire de roues avant (36) montées de façon à pouvoir tourner sur les extrémités opposées d'un essieu (42) du dispositif de levage (14), de sorte que les axes de rotation des roues avant (36) sont fixes l'un par rapport à l'autre, l'essieu (42) pouvant tourner en roulis par rapport au dispositif de levage (14) autour d'un axe horizontal et pouvant pivoter, avec le dispositif de levage (14), sur pratiquement 90 degrés de chaque côté d'une position droit devant par rapport au corps (12) pour diriger le chariot (10), **caractérisé en ce que** chacune des roues avant et arrière (16, 3 6) est entraînée par un moteur séparé (54) et un moyen (52) est prévu pour réguler la puissance transmise à chacun des moteurs (54).

2. Chariot élévateur (10) selon la revendication 1, **caractérisé en ce que** chaque moteur (54) peut être entraîné dans un sens vers l'avant ou vers l'arrière.

3. Chariot élévateur (10) selon la revendication 2, **caractérisé en ce qu'**une roue arrière (16) peut être entraînée dans le sens opposé à celui de l'autre roue arrière (16).

4. Chariot élévateur (10) selon les revendications 1 à 3, **caractérisé en ce que** les moteurs (54) sont des moteurs hydrauliques, une source de puissance (48) entraînant une pompe hydraulique (50) pour fournir un fluide hydraulique sous pression aux moteurs hydrauliques (54).

5. Chariot élévateur (10) selon la revendication 4, **caractérisé en ce que** la pompe hydraulique (50) est une pompe à cylindrée variable.

6. Chariot élévateur (10) selon la revendication 5, **caractérisé en ce que** la pompe à cylindrée variable est une pompe du type à plateau oscillant.

7. Chariot élévateur (10) selon l'une quelconque des revendications 4 à 6, **caractérisé en ce que** la source de puissance (48) est un moteur à combustion interne.

8. Chariot élévateur (10) selon la revendication 7, **caractérisé en ce que** le carburant destiné au moteur à combustion interne est un carburant gazeux.

9. Chariot élévateur (10) selon l'une quelconque des revendications 1 à 3, **caractérisé en ce que** les moteurs (54) sont des moteurs électriques, l'électricité pour entraîner les moteurs étant fournie depuis une source d'alimentation.

10. Chariot élévateur (10) selon l'une quelconque des revendications 4 à 6 et 9, **caractérisé en ce que** la source d'alimentation (48) est une batterie.

11. Chariot élévateur (10) selon l'une quelconque des revendications précédentes, **caractérisé en ce que** la voie des deux roues avant (36) est inférieure à la voie (T) des deux roues arrière (16).

12. Chariot élévateur (10) selon l'une quelconque des revendications précédentes, **caractérisé en ce que** la distance horizontale (D) entre le point autour duquel les roues avant (36) s'orientent et l'axe horizontal des roues avant (36) est inférieure ou égale à la moitié de la voie (T) des deux roues arrière (16).
